# DEMANDE DE BREVET EUROPEEN

(11) **EP 1 909 456 A2**
(43) Date de publication de la demande: **09.04.2008**
(21) Numéro de dépôt: 07115996.6
(22) Date de dépôt: 10.09.2007
(51) Int. Cl.: H04L 29/06

(54) **Dispositif et méthode de contrôle et de sécurité d'un sous-système multimédia**

(30) Priorité: 04.10.2006 FR 0654078
(71) Demandeur: Alcatel Lucent, 75008 Paris (FR)
(72) Inventeur: Gondel, Antoine, 92370 Chaville (FR)
(74) Mandataire: Chaffraix, Sylvain

(57) **Abrégé**

Un dispositif de contrôle et de sécurité d'un sous-système multimédia utilisant le protocole Internet est destiné à contrôler et à sécuriser une pluralité de session. Chaque session est initiée par un équipement utilisateur 5 afin d'accéder à un service multimédia. Le dispositif comporte une entité de contrôle mandataire P-CSCF 2 comprenant des moyens de contrôle 2a et des moyens de sécurité. Les moyens de sécurité assurent une fonction de sécurité. Les moyens de sécurité comporte une interface 6 avec un serveur passerelle de sécurité 3 par l'intermédiaire de laquelle l'entité de contrôle mandataire P-CSCF 2 délègue la fonction de sécurité au serveur passerelle de sécurité 3.

## Description

### DOMAINE TECHNIQUE DE L'INVENTION

L'invention se rapporte au domaine des réseaux de télécommunications, et plus particulièrement à la sécurité des réseaux de télécommunications. Une application particulière de l'invention vise l'architecture de réseau et de service IMS (pour Internet protocol Multimedia Sub-system), c'est-à-dire l'architecture des sous-systèmes multimédias utilisant le protocole Internet.

### ETAT DE LA TECHNIQUE ANTERIEURE

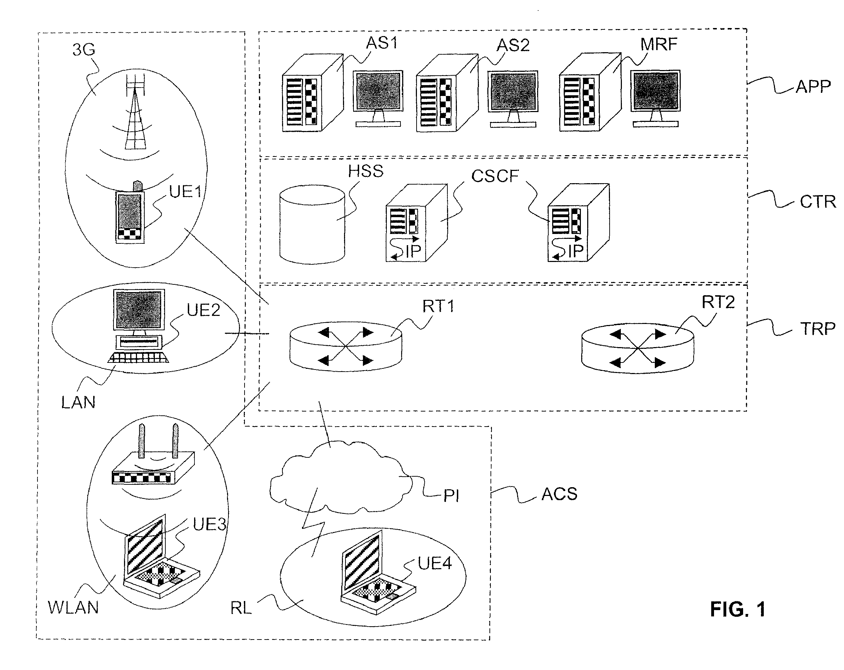

La Figure 1 est une représentation schématique d'une installation de communication montrant l'architecture de réseau et de service IMS. L'architecture de réseau et de service IMS est structurée en plusieurs couches comportant une couche accès ACS, une couche transport TRP, une couche contrôle CTR et une couche application APP. La couche accès ACS correspond à tout type d'accès permettant de connecter un équipement utilisateur UE1, UE2, UE3, UE4 à un réseau de communication ayant une connectivité supportant le protocole IP. A titre d'exemple, l'équipement utilisateur peut être un téléphone, un assistant personnel PDA, un ordinateur fixe ou portable, etc....muni de moyens de connexion à un réseau de communication. A titre d'exemple, le réseau de communication peut être un réseau de télécommunication mobile 3G, GPRS, UMTS ou CDMA2000, un réseau de télécommunication local filaire LAN ou sans fil WLAN, WiMAX, ou un réseau de télécommunication distant RL relié à l'Internet public PI par l'ADSL ou le réseau de télévision par câble. En outre, les systèmes plus anciens de commutation de circuit (POTS, GSM) peuvent être supportés par l'intermédiaire de passerelles spécifiques.
La couche transport TRP correspond à un réseau utilisant le protocole Internet IP, par exemple le protocole IPv6. Elle comporte notamment des routeurs, par exemple RT1, RT2 reliés par un réseau de transmission.
La couche contrôle CTR correspond au contrôle des sessions IMS. Elle comporte des entités de contrôle CSCF (pour Call Session Control Function) utilisant le protocole d'initiation de session SIP (pour Session Initiation Protocol) et assurant le routage des requêtes SIP entre les équipements utilisateurs UE1, UE2, UE3, UE4 et les serveurs d'applications AS1, AS2. Le protocole SIP est un protocole de signalisation du groupement IETF (pour Internet Engineering Task Force) assurant le contrôle des sessions ainsi que le contrôle des services IMS. La couche contrôle CTR comporte également la base de données HSS (pour Home Subscriber Server).

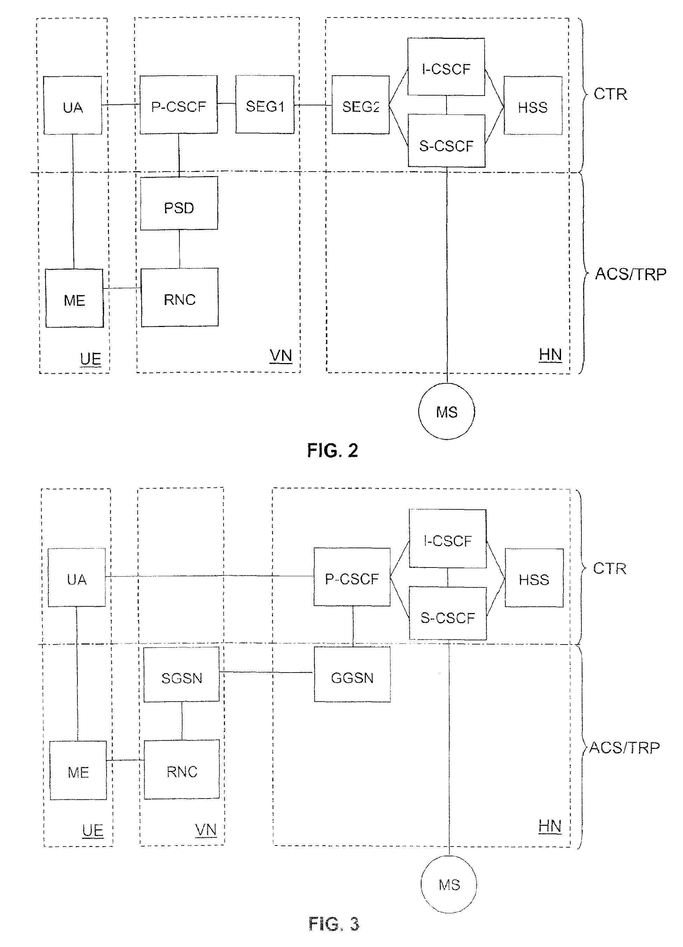

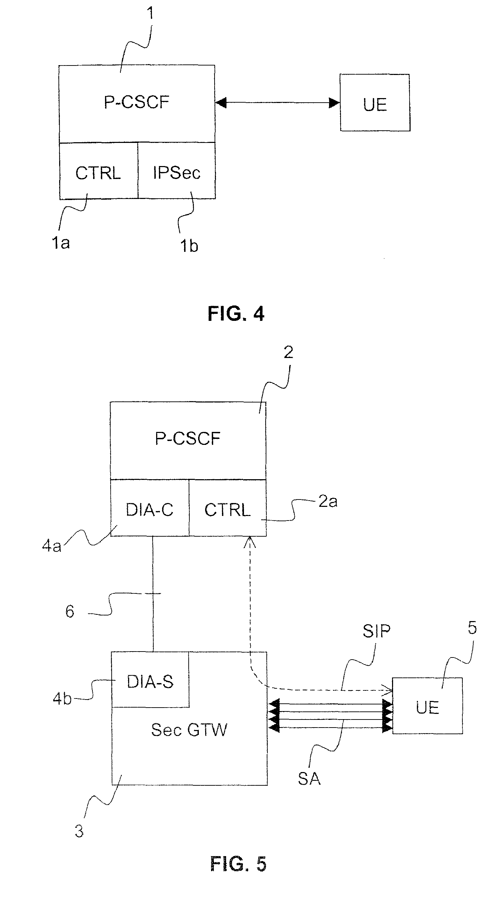

La couche application APP correspond à l'ensemble des services proposés aux utilisateurs par le biais de serveurs d'application, par exemple AS1, AS2, et de serveurs de média MRF (pour Multimedia Ressource Function).
L'IMS supporte les sessions applicatives temps réels (voix sur IP - VoIP, vidéo, conférence, jeux multi-joueurs, etc....) et non temps réel (Push To Talk, Push To Show, information de présence, partage de contenus, messagerie instantanée, services pour communautés, etc....). L'IMS satisfait au concept de convergence de services supportés indifféremment par des réseaux de types différents (fixe, mobile ou Internet).
La spécification technique TS 33.203 publiée par l'organisation 3GPP (pour 3rd Generation Partnership Project) spécifie les caractéristiques et les mécanismes de sécurité pour accéder aux sous-systèmes multimédias utilisant le protocole Internet (IMS) pour un système de télécommunication mobile de 3^{eme} génération (3G). Cette spécification est régulièrement mise à jour et publiée depuis 2002 sur le site web http://www.3gpp.org. Les Figures 2 et 3 sont respectivement une première et une seconde représentation schématique des architectures et mécanismes d'accès et de sécurité pour une architecture IMS selon cette spécification technique. Les architectures IMS représentées sur les Figures 2 et 3 diffèrent l'une de l'autre en ce que l'entité de contrôle mandataire P-CSCF (pour Proxy Call Session Control Function) est respectivement positionnée dans le réseau visité VN (pour Visited Network) et dans le réseau d'origine HN (pour Home Network).
Les Figures 2 et 3 montrent la couche accès et transport ACS/TRP d'une part, et la couche contrôle CTR d'autre part. L'équipement utilisateur UE comporte un équipement mobile ME et un agent utilisateur UA (pour User Agent) supportant le protocole IP, pouvant émettre et recevoir des requêtes de type SIP.
Sur la Figure 2, le réseau visité VN comporte un contrôleur de réseau RNC (pour Radio Control Network Controller), et également une entité de contrôle mandataire P-CSCF reliée à un serveur passerelle de sécurité SEG1. Le contrôleur de réseau RNC est relié à l'entité de contrôle mandataire P-CSCF via le réseau de type paquet commuté PSD (pour Packet Switched Domain). Le réseau d'origine comporte un autre serveur passerelle de sécurité SEG2 relié à une entité de contrôle d'interrogation I-CSCF (pour Interrogating Call Session Control Function) et à une entité de contrôle de service S-CSCF (pour Serving Call Session Control Function).
Sur la Figure 3, le réseau visité VN comporte un contrôleur de réseau RNC et un noeud de service SGSN (pour Serving General packet radio service Support Node). Le réseau d'origine HN comporte un noeud de passerelle GGSN (pour Gateway GPRS Support Node) relié à une entité de contrôle mandataire P-CSCF, ainsi qu'une entité de contrôle d'interrogation I-CSCF et une entité de contrôle de service S-CSCF.
L'entité de contrôle d'interrogation I-CSCF et l'entité de contrôle de service S-CSCF sont reliées à la base de données utilisateurs HSS. L'entité de contrôle de service S-CSCF permet l'invocation de service multimédia MS.
Les entités de contrôle P-CSCF, I-CSCF et S-CSCF contrôlent la session initiée par un équipement utilisateur UE. La session est prise en charge dans le réseau d'origine HN car il s'agit du réseau dans lequel l'utilisateur a souscrit à des services IMS spécifiques auprès de l'opérateur de ce réseau.
L'entité de contrôle mandataire P-CSCF se comporte comme un serveur mandataire (Proxy Server) et relaye tous les messages/requêtes de type SIP vers le destinataire approprié. L'entité de contrôle mandataire P-CSCF permet à l'équipement utilisateur UE d'accéder au réseau en s'enregistrant auprès du réseau d'origine HN ou du réseau visité VN. Ceci permet à un équipement utilisateur d'établir une session multimédia ou de recevoir une demande de session afin de pouvoir utiliser les services IMS. Par la suite, l'entité P-CSCF garde l'authentification de l'utilisateur et achemine les requêtes de et vers cet utilisateur.
L'entité de contrôle d'interrogation I-CSCF est le point de contact au sein du réseau de l'opérateur pour toutes les sessions destinées à un utilisateur de cet opérateur. En particulier, l'entité I-CSCF permet de localiser un utilisateur dans un réseau lorsqu'une requête provient d'un autre réseau.
L'entité de contrôle de service S-CSCF prend en charge le contrôle de la session et maintient un état de session afin de permettre l'invocation des services multimédias MS selon les informations contenues dans la base de données HSS. En particulier, l'entité S-CSCF permet l'enregistrement, l'authentification et la localisation d'un utilisateur dans un réseau local ainsi que la mise en relation de l'utilisateur avec des serveurs d'application procurant les services multimédias MS.
Dans l'architecture de la Figure 3, les entités P-CSCF, I-CSCF et S-CSCF peuvent être réunies au sein d'un même serveur CSCF.
La base de données HSS comprend les données des utilisateurs et des informations concernant les services IMS auxquels les utilisateurs sont abonnés via l'opérateur du réseau d'origine HN. La base de données HSS intervient dans l'authentification des utilisateurs et l'autorisation d'accès aux services.
Les documents RFC (pour Request For Comments) No. 2401 et No. 4301 spécifie l'architecture de sécurité pour les systèmes compatibles avec IPSec (pour Internet Protocol Security), c'est-à-dire les protocoles et mécanismes de sécurité du trafic au niveau de la couche de transport fonctionnant selon le protocole internet IP. Ces documents ont été respectivement publiés en Novembre 1998 et en Décembre 2005 par l'IETF (pour Internet Engineering Task Force) sur le site web http://www.ietf.org. L'ensemble de protocole IPSec assure notamment l'authentification mutuelle de l'équipement utilisateur et de son interlocuteur, la confidentialité des données échangées avec chiffrement éventuel, l'authenticité des données, l'intégrité des données échangées, la protection contre les écoutes et analyses de trafic, et la protection contre le rejeu. IPSec repose sur plusieurs protocoles de sécurité différents tels que le protocole IKE (pour Internet Key Exchange, décrit dans le document RFC No 2409), le protocole AH (pour Authentication Header, décrit dans le document RFC No 2402) et le protocole ESP (pour Encapsulating Security Payload, décrit dans le document RFC No 2406).
Comme illustré à la Figure 4, les entités de contrôle CSCF, par exemple l'entité de contrôle mandataire P-CSCF 1 traite à la fois la couche de contrôle SIP 1a et la couche de sécurité IPSec 1b. Par conséquent, les entités de contrôle CSCF et en particulier l'entité de contrôle mandataire P-CSCF doit assurer plusieurs fonctions comme décrites ci-dessus, ce qui complique sa structure et les tâches à effectuer tout en limitant le nombre de transactions qui peuvent être traité dans un temps déterminé.

### EXPOSE DE L'INVENTION

Un but de l'invention est de proposer une entité de contrôle CSCF remédiant à au moins un des inconvénients de l'art antérieur.

Plus précisément, la présente invention concerne un dispositif de contrôle et de sécurité d'un sous-système multimédia utilisant le protocole Internet destiné à contrôler et à sécuriser une pluralité de session. Chaque session est initiée par un équipement utilisateur dans le but d'accéder à un service multimédia. Le dispositif comporte une entité de contrôle mandataire P-CSCF comprenant des moyens de contrôle et des moyens de sécurité, les moyens de sécurité assurant une fonction de sécurité. Les moyens de sécurité comporte en outre une interface avec un serveur passerelle de sécurité par l'intermédiaire de laquelle l'entité de contrôle mandataire P-CSCF délègue la fonction de sécurité au serveur passerelle de sécurité.

L'entité de contrôle mandataire P-CSCF et le serveur passerelle de sécurité peuvent comporter une application "Diameter" de telle sorte que l'entité de contrôle mandataire P-CSCF est un client "Diameter" et le serveur passerelle de sécurité est un serveur "Diameter".
Le serveur passerelle de sécurité peut être une entité pare-feu, et/ou une entité de réseau privé virtuel VPN.
La fonction de sécurité consiste en l'établissement et le contrôle d'une association de sécurité selon le protocole de sécurité IPSec entre l'équipement utilisateur et le serveur passerelle de sécurité.

L'invention concerne également une installation de communication permettant à une pluralité d'équipement utilisateur d'accéder à des services multimédia d'un sous-système multimédia utilisant le protocole Internet par l'intermédiaire d'au moins une session conforme au protocole d'initiation de session SIP, l'installation de communication comportant une couche accès, une couche transport, une couche contrôle et une couche application. La couche contrôle comporte un dispositif de contrôle et de sécurité selon l'invention qui est destiné à contrôler et à sécuriser chaque session.

Selon un autre aspect de l'invention, il est également proposé une méthode de contrôle et sécurisation d'un sous-système multimédia utilisant le protocole Internet destinée à contrôler et à sécuriser une pluralité de session. Chaque session est initiée par un équipement utilisateur afin d'accéder à un service multimédia. Le contrôle et la sécurisation de chaque session est mis en oeuvre par une entité de contrôle mandataire P-CSCF. La méthode de contrôle et sécurisation comporte une étape de délégation de la sécurisation à un serveur passerelle de sécurité.

L'entité de contrôle mandataire P-CSCF peut contrôler le serveur passerelle de sécurité par l'intermédiaire du protocole "Diameter".
La sécurisation de chaque session consiste en l'établissement et le contrôle d'une association de sécurité selon le protocole de sécurité IPSec entre l'équipement utilisateur et le serveur passerelle de sécurité.

Enfin, l'invention concerne également un produit programme d'ordinateur destiné à être chargé dans une mémoire d'une entité de contrôle mandataire P-CSCF et d'un serveur passerelle de sécurité, le produit programme d'ordinateur comportant des portions de code de logiciel mettant en oeuvre la méthode de contrôle et sécurisation selon l'invention lorsque le programme est exécuté par ladite entité et ledit serveur.

Avec l'invention, il est possible de séparer la partie concernant la sécurité de l'entité de contrôle mandataire, en particulier la couche de sécurité IPSec de la couche de contrôle SIP, ce qui permet d'augmenter le nombre de transactions traité dans un temps déterminé.
De plus, l'utilisation du protocole "Diameter" permet d'assurer la fonction de sécurité et son contrôle en temps réel. En particulier, le protocole "Diameter" permet par des commandes simples de mettre en oeuvre la politique de sécurité IPSec, de connaître l'état d'une association de sécurité, etc...

### DESCRIPTION DES FIGURES

La présente invention est illustrée par des exemples non limitatifs sur les Figures jointes, dans lesquelles des références identiques indiquent des éléments similaires:
La Figure 1 est une représentation schématique d'une installation de communication selon l'art antérieur;
Les Figures 2 et 3 sont respectivement une première et une seconde représentation schématique d'une architecture de sécurité pour un sous-système multimédia utilisant le protocole Internet selon l'art antérieur;
La Figure 4 est une représentation schématique d'une entité de contrôle mandataire P-CSCF selon l'art antérieur; et
La Figure 5 est une représentation schématique d'une partie d'une installation de communication comportant une entité de contrôle mandataire P-CSCF selon l'invention.

### DESCRIPTION DETAILLEE DE L'INVENTION

La Figure 5 représente schématiquement une partie d'une installation de communication. Selon l'invention, cette installation de communication diffère de celle représentée aux Figures 1 à 3 en ce qu'elle comporte une entité de contrôle mandataire P-CSCF 2 selon l'invention et un serveur passerelle de sécurité 3.
L'entité de contrôle mandataire P-CSCF 2 assure la fonction de contrôle SIP 2a et délègue la fonction de sécurité au serveur passerelle de sécurité 3. L'entité de contrôle mandataire P-CSCF 2 est par exemple un appareil 7720 ABC commercialisé par la société Alcatel.

Le serveur passerelle de sécurité 3 peut être une entité pare-feu ou une entité de réseau privé virtuel VPN (pour Virtual Private Network). Le serveur passerelle de sécurité 3 est par exemple un serveur iQ4xxx commercialisé par la société Reefpoint.

La délégation de la fonction de sécurité de l'entité de contrôle mandataire P-CSCF 2 au serveur passerelle de sécurité 3 est rendue possible par l'utilisation du protocole "Diameter". Le protocole "Diameter" est un protocole connu décrit dans le document RFC No 3588 publié en Septembre 2003. Le protocole "Diameter" décrit un mécanisme d'authentification, d'autorisation, et de prise en compte AAA (en anglais Authentication, Authorization and Accounting) pour des applications telles que l'accès aux réseaux de communication et la mobilité IP. L'entité de contrôle mandataire P-CSCF 2 comporte une application "Diameter" de sorte que l'entité de contrôle mandataire P-CSCF 2 joue le rôle de client "Diameter" 4a. Le serveur passerelle de sécurité 3 comporte une application "Diameter" de sorte que le serveur passerelle de sécurité 3 joue le rôle de serveur "Diameter" 4b. Par ce biais, une interface "Diameter" 6 est créée entre l'entité de contrôle mandataire P-CSCF 2 et le serveur passerelle de sécurité 3 permettant à l'entité P-CSCF d'obtenir des clés de sécurité, des adresses et des règles de sécurité.

Un équipement utilisateur 5 cherche à accéder à des services multimédia procurés par un sous-système multimédia utilisant le protocole Internet (voir Figures 1 à 3). Pour autoriser cet accès, l'entité de contrôle mandataire P-CSCF 2 délègue au serveur passerelle de sécurité 3 l'établissement et le contrôle d'une pluralité d'association de sécurité SA selon IPSec entre l'équipement utilisateur 5 (client multimédia) et le serveur passerelle de sécurité 3.
L'association de sécurité SA comprend toutes les informations requises pour mettre en place les services de sécurité entre une source et une destination, c'est-à-dire les informations requises pour caractériser et échanger des données à protéger. Les informations sont les adresses de source et de destination, un nom sous forme standard permettant de distinguer plusieurs associations de sécurité dédiées, le protocole de transport, les ports source et destination, quels traitements doivent être appliqués au trafic identifié précédemment, le protocole de sécurité (AH Authentication Header ou ESP Encapsulating Security Payload), les données et paramètres d'authentification (pour le protocole AH ou ESP, algorithmes, clés, etc...), les données et paramètres de confidentialité (pour AH ou ESP, algorithmes, clés, vecteurs d'initialisation, etc...), les données et paramètres d'anti-rejeu (nombres de séquence, compteurs divers, fenêtres d'anti-rejeu, etc...), le mode du protocole IPSec (mode transport, tunnel ou les 2), la durée de vie de l'association de sécurité (temps ou quantité maximale de données à protéger), les options de fragmentation.
Typiquement, un jeu de quatre associations de sécurité est établi avec chaque équipement utilisateur 5. En effet, la spécification technique TS 33.203 impose l'établissement de deux connexions IPSec avec chaque équipement utilisateur pour le transport des messages SIP, une connexion IPSec comportant deux associations de sécurité unidirectionnelles. Les messages SIP sont transportés par l'intermédiaire de ces associations de sécurité, lesquelles assurent la protection desdits messages. L'entité de contrôle mandataire P-CSCF 2 contrôle l'établissement de ces associations de sécurité SA par l'intermédiaire de l'interface "Diameter" 6.

L'application "Diameter" permet à l'entité de contrôle mandataire P-CSCF 2 de requérir l'établissement d'un nouveau jeu d'association de sécurité SA entre un équipement utilisateur déterminé et un serveur passerelle de sécurité, de renouveler les horloges d'inactivité des associations de sécurité au niveau du serveur passerelle de sécurité, et de requérir la suppression d'un jeu d'association de sécurité SA existant.

Lorsqu'une requête en vue de l'établissement d'un nouveau jeu d'association de sécurité SA est envoyé en direction du serveur passerelle de sécurité, l'entité de contrôle mandataire P-CSCF inclut dans sa requête un jeu d'AVP (pour Attribute Value Pair) spécifiquement défini dans ce but. Le jeu d'AVP donne le sélecteur de trafic, l'adresse IP et les clés de cryptage.

L'application "Diameter" permet également au serveur passerelle de sécurité de notifier l'entité de contrôle mandataire P-CSCF qu'un jeu d'association de sécurité SA a été supprimé.

Le maintien de la synchronisation entre l'entité de contrôle mandataire P-CSCF et le serveur passerelle de sécurité dépend du protocole "Diameter", lequel comprend des mécanismes de type surveillance ("watchdog") et d'état ("origin-state-id"). Ces mécanismes permettent à l'entité de contrôle mandataire P-CSCF de superviser le fonctionnement du serveur passerelle de sécurité et de se resynchronisé avec lui en cas de besoin.

Grâce au mécanisme de délégation décrit ci-dessus, l'entité de contrôle mandataire P-CSCF se concentre sur la tâche principal de contrôle des sessions SIP alors que le serveur passerelle de sécurité traite la tâche de sécurité. Ceci permet d'augmenter approximativement d'un facteur 10 le nombre de transactions traité dans un temps déterminé comparativement à l'art antérieur.

### REMARQUES FINALES

Les figures et leurs descriptions faites ci-dessus illustrent l'invention plutôt qu'elles ne la limitent. En particulier, l'invention vient d'être décrite en relation avec un exemple particulier d'application aux sous-systèmes multimédias utilisant le protocole Internet IMS. Au-delà de la gestion des associations de sécurité, l'invention peut également trouver une application pour la gestion d'autres aspects du serveur passerelle de sécurité comme, par exemple, l'autorisation des sessions media (flux en temps réel RTP) traversant celle-ci.

Les moyens et entités mentionnés dans la description ci-dessus peuvent être réalisés sous la forme de circuits électroniques, de modules logiciels ou informatiques, ou d'une combinaison de circuits électroniques et de modules logiciels.

Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclue pas la présence d'une pluralité de tels éléments.

## Revendications

1. Un dispositif de contrôle et de sécurité d'un sous-système multimédia utilisant le protocole Internet destiné à contrôler et à sécuriser une pluralité de session, chaque session étant initiée par un équipement utilisateur (5) afin d'accéder à un service multimédia (MS), comportant une entité de contrôle mandataire P-CSCF (2) comprenant des moyens de contrôle (2a) et des moyens de sécurité, les moyens de sécurité assurant une fonction de sécurité,
le dispositif de contrôle et de sécurité est **caractérisé en ce que** les moyens de sécurité comporte en outre une interface (6) avec un serveur passerelle de sécurité (3) par l'intermédiaire de laquelle l'entité de contrôle mandataire P-CSCF (2) délègue la fonction de sécurité au serveur passerelle de sécurité (3).

2. Un dispositif de contrôle et de sécurité selon la revendication 1, dans lequel l'entité de contrôle mandataire P-CSCF (2) et le serveur passerelle de sécurité (3) comportent une application "Diameter" de telle sorte que l'entité de contrôle mandataire P-CSCF (2) est un client "Diameter" (4a) et le serveur passerelle de sécurité (3) est un serveur "Diameter" (4b).

3. Un dispositif de contrôle et de sécurité selon l'une des revendications précédentes, dans lequel le serveur passerelle de sécurité (3) est une entité pare-feu.

4. Un dispositif de contrôle et de sécurité selon l'une des revendications précédentes, dans lequel le serveur passerelle de sécurité (3) est une entité de réseau privé virtuel VPN.

5. Un dispositif de contrôle et de sécurité selon l'une des revendications précédentes, dans lequel la fonction de sécurité consiste en l'établissement et le contrôle d'une association de sécurité (SA) selon le protocole de sécurité IPSec entre l'équipement utilisateur (5) et le serveur passerelle de sécurité (3).

6. Une installation de communication permettant à une pluralité d'équipement utilisateur (UE1, UE2, UE3, UE4) d'accéder à des services multimédia d'un sous-système multimédia utilisant le protocole Internet (IMS) par l'intermédiaire d'au moins une session conforme au protocole d'initiation de session SIP, l'installation de communication comportant une couche accès (ACS), une couche transport (TRP), une couche contrôle (CTR) et une couche application (APP),
l'installation de communication est **caractérisée en ce que** la couche contrôle (CTR) comporte un dispositif de contrôle et de sécurité selon l'une des revendications 1 à 5 destiné à contrôler et à sécuriser chaque session.

7. Une méthode de contrôle et sécurisation d'un sous-système multimédia utilisant le protocole Internet destinée à contrôler et à sécuriser une pluralité de session, chaque session étant initiée par un équipement utilisateur (5) afin d'accéder à un service multimédia (MS), le contrôle et la sécurisation de chaque session étant mis en oeuvre par une entité de contrôle mandataire P-CSCF (2),
la méthode de contrôle et sécurisation est **caractérisée en ce qu'**elle comporte une étape de délégation de la sécurisation à un serveur passerelle de sécurité (3).

8. Une méthode de contrôle et sécurisation selon la revendication 7, dans laquelle l'entité de contrôle mandataire P-CSCF (2) contrôle le serveur passerelle de sécurité (3) par l'intermédiaire du protocole "Diameter".

9. Une méthode de contrôle et sécurisation selon la revendication 7 ou 8, dans laquelle la sécurisation de chaque session consiste en l'établissement et le contrôle d'une association de sécurité (SA) selon le protocole de sécurité IPSec entre l'équipement utilisateur (5) et le serveur passerelle de sécurité (3).

10. Un produit programme d'ordinateur destiné à être chargé dans une mémoire d'une entité de contrôle mandataire P-CSCF (2) et d'un serveur passerelle de sécurité (3), le produit programme d'ordinateur comportant des portions de code de logiciel mettant en oeuvre la méthode de contrôle et sécurisation selon l'une des revendications 7 à 9 lorsque le programme est exécuté par l'entité de contrôle mandataire P-CSCF (2) et le serveur passerelle de sécurité (3).
